# EUROPÄISCHE PATENTSCHRIFT

(11) **EP 2 047 237 B1**
(45) Veröffentlichungstag und Bekanntmachung des Hinweises auf die Patenterteilung: **27.01.2016**
(21) Anmeldenummer: 07786081.5
(22) Anmeldetag: 16.07.2007
(51) Int. Cl.: G01N 21/64, G02B 21/00

(54) **ANORDNUNG ZUR SIGNALVERARBEITUNG AM AUSGANG EINES MEHRKANALDETEKTORS**
ARRANGEMENT FOR PROCESSING SIGNALS AT THE OUTPUT OF A MULTICHANNEL DETECTOR
ENSEMBLE POUR TRAITER DES SIGNAUX À LA SORTIE D'UN DÉTECTEUR MULTICANAUX

(30) Priorität: 28.07.2006 DE 102006034905
(43) Veröffentlichungstag der Anmeldung: 15.04.2009
(73) Patentinhaber: Carl Zeiss Microscopy GmbH, 07745 Jena (DE)
(72) Erfinder: WOLLESCHENSKY, Ralf, 07743 Jena (DE); LIEDTKE, Mirko, 07745 Jena (DE)
(74) Vertreter: Hampe, Holger
(86) Internationale Anmeldenummer: PCT/EP2007/006279
(87) Internationale Veröffentlichungsnummer: WO 2008/011999

(56) Entgegenhaltungen:
- DE-A1- 10 008 594
- DE-A1- 10 033 180
- DE-A1- 10 231 776
- DE-A1- 19 858 456
- DE-A1-102005 049 723
- US-A1- 2005 213 188
- WOLLESCHENSKY R ET AL: "High-speed scanning confocal microscope for the life sciences" PROCEEDINGS OF THE SPIE, SPIE, BELLINGHAM, VA, US, Bd. 5860, Nr. 1, 2005, Seiten 87-94, XP002433694 ISSN: 0277-786X
- ELSON D S ET AL: "Single-shot fluorescence lifetime imaging using a novel segmented gated optical intensifier" LASERS AND ELECTRO-OPTICS, 2004. (CLEO). CONFERENCE ON SAN FRANCISCO, CA, USA MAY 20-21, 2004, PISCATAWAY, NJ, USA,IEEE, Bd. 2, 20. Mai 2004 (2004-05-20), Seiten 751-752, XP010744863 ISBN: 1-55752-777-6
- DICKINSON M E ET AL: "Sensitive imaging of spectrally overlapping fluorochromes using the LSM 510 META" PROCEEDINGS OF THE SPIE, SPIE, BELLINGHAM, VA, US, Bd. 4620, 2002, Seiten 123-136, XP002290909 ISSN: 0277-786X

## Beschreibung

Zur zeitaufgelösten Messung von Fluoreszenzerscheinungen (Energietransfer, FLIM) werden Kurzpulslaser eingesetzt.

Das Fluorophor wird durch einen starken ultrakurzen Laserpuls angeregt und der zeitliche Abfall der Fluoreszenz wird untersucht.

Aus DE 10033180A1, das zum Bestandteil der vorliegenden Offenbarung gehört, ist es bekannt, das von der Probe ausgehenden Fluoreszenzsignal spektral aufzulösen und die Spektralkomponenten mit einem Mehrkanaldetektor aufzuzeichnen.

Bei der Erfassung von FLIM Informationen aus einem Mehrkanaldetektor, beispielsweise einem 32 - fach PMT der Firma Hamamatsu kommt es darauf an, die eingehenden Signale auf möglichst einfache Weise gleichzeitig, zeitlich exakt und ohne Totzeiten aufzuzeichnen. Hier bietet die vorliegende Erfindung einen besonders vorteilhaften Ansatz.

In DE 19858456A1 werden verschiedene Mikroskoptypen wie Weitfeldmikroskop, Rastermikroskop erwähnt, im Zusammenhang mit Beleuchtungs- und Detektionsmasken, wobei eine mathematische Entfaltung mit Hilfe einer speziellen Rechnerhardware unter Verwendung von FPGA's (= Field Programmable Gate Arrays) zur Verarbeitung in Echtzeit angesprochen wird.

In Fig. 1 ist ein 32 - fach PMT dargestellt, der gemäß DE 1033180A1 eine zeitabhängige Intensitäts- und Spektralinformation liefert. Diesem nachgeschaltet sind zwei ASIC (z.B. von Hamamatsu), welche je 16 Kanäle im photon counting mode betreiben.

Hier werden Schaltschwellen über Komparatoren zur Rauschtrennung festgelegt und am Ausgang der ASICS liegt für jeden PMT Kanal ein differentielles Leitungspaar zur Bereitstellung einer digitalen 1 oder 0 Information (Puls oder kein Puls) vor.

Ermittelt werden soll nun, wie viel Pulse innerhalb einer von einer Pixelclock festgelegten Zählzeit pro Kanal ankommen und wie sie sich zeitlich verteilen.

Dies erfolgt erfindungsgemäß innerhalb einer FPGA (free programmable gate array).

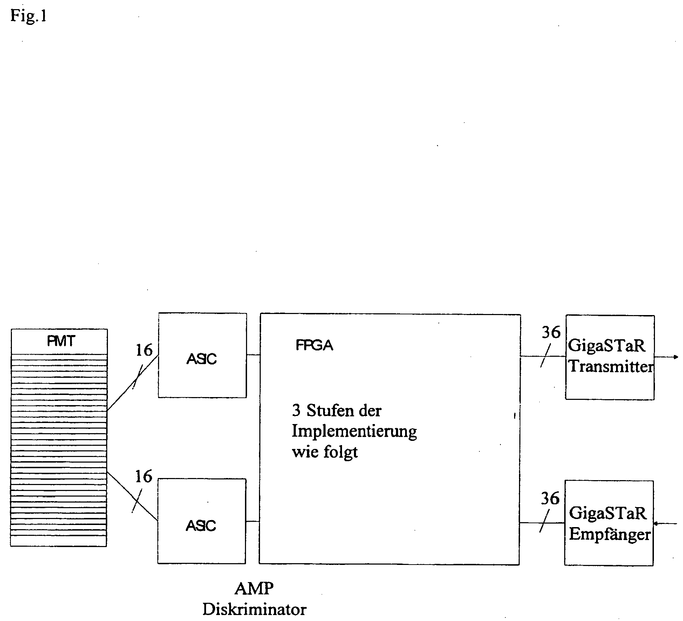

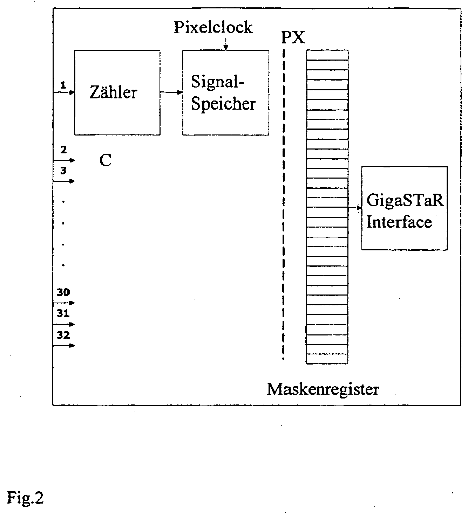

Der erste Schritt ist in Fig. 2 dargestellt. Jedem PMT Kanal ist in der FPGA ein asynchroner Zähler C zugeordnet, in den alle Puls einlaufen.

Durch einen Zähler (Counter) werden die Impulse pro Zeiteinheit in Registern abgelegt. Jede Zählzeit hat ein Register, von diesem kann es dann in einem Speicher abgespeichert werden Das erfolgt quasi über Schubladen (32 Türen im Register), es wird nur das abgespeichert was interessiert.

Der systemübergreifende Pixelclock PX bestimmt den Zeitpunkt, zu welchen der gegenwärtige Zählerstand zwischengespeichert und zur Übertragung an Speicher (PC) über Interface (Giga Star) vorbereitet wird.

Nach dem Auslesen der Zähler werden diese gelöscht und der Zählvorgang startet von neuem.

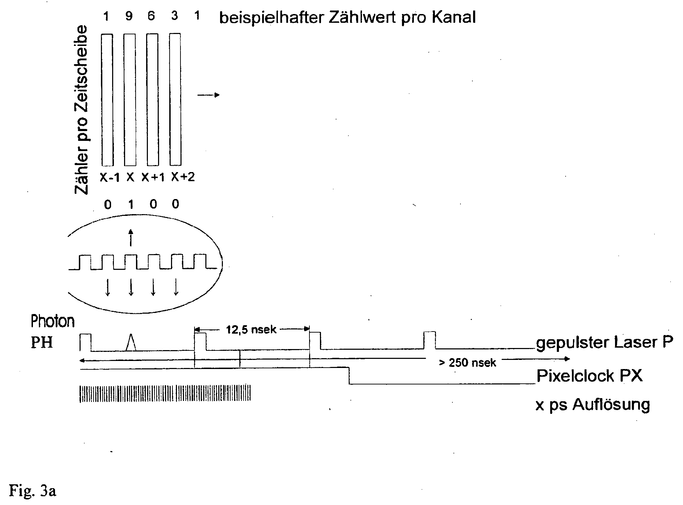

In Fig. 3a) ist schematisch die zeitliche Zuordnung der Pixelclock PY, der eine Probenreaktion auslösenden Laserpulse P sowie der eingehenden Photonen als Probenreaktion pro PMT Kanal dargestellt.

Im Oberen Teil sind Zeitfenster X, X+1 usw. dargestellt, die innerhalb eines Zählzyklus ( Zeit zwischen zwei Laserpulsen)liegen, wobei für die einzelnen Zeitfenster Zählregister vorgesehen sind.

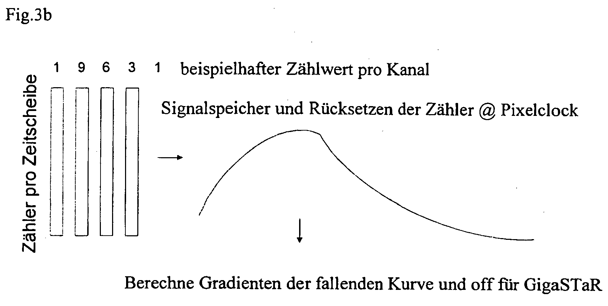

Fig. 3b zeigt den zeitlichen Signalverlauf pro PMT Kanal, der der Auslesung der Zählregister entsprechen würde.

Beispielsweise wird nicht der gesamte Spektralbereich betrachtet.

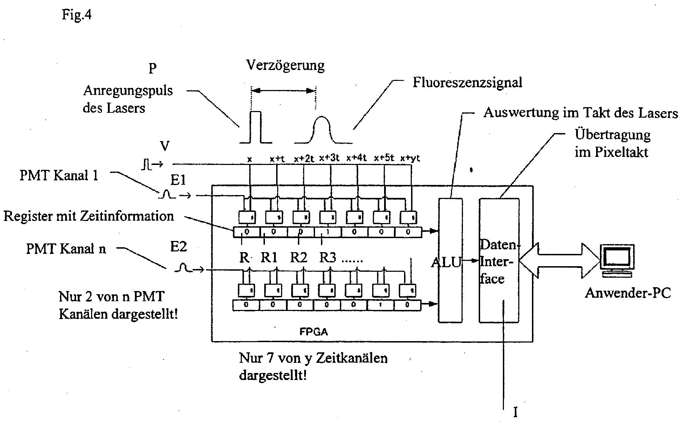

In Fig. 4 ist dargestellt, wie innerhalb der FPGA die zeitliche Auswertung erfolgt. Dargestellt sind beispielhaft die Eingänge E1, E2, von zwei PMT Kanälen kommend, die die digitalisierten Signale von den ASIC erhalten.

Durch hardwaremäßige Verdrahtung V mit unterschiedlicher Länge oder programmierbare Verzögerungskanäle (wie dargestellt) wird dafür gesorgt, dass Register R,R1, R2 jeweils zu unterschiedliche Zeiten X, x+t, X+2t, geöffnet werden und dadurch die über die Eingänge E1, E2 eingehenden Impulse in die Register gelangen, die eindeutig einer Zeit zugeordnet ist, die einer bestimmten Verzögerung nach der Auslösung eines Startsignals (Anregungspuls P des Lasers) entspricht. Hardwaremäßig werden beispielsweise 64 Eingänge (Bitbreite für ein Datenbord) genommen und jedes der Pin von außen mit einer Leitung V bestimmter Länge miteinander verknüpft Nur das Register mit dem ankommenden Puls(en) hat ein Signal 1, die anderen 0.

Jetzt liegt die Zeitinformation vor.

Die Werte werden in Register als Zählwerte pro Kanal übertragen.

Im Takt der Anregungspulse P erfolgt eine Auslesung der Register R mit der in ihnen enthaltenen Zeitinformation und über ein Interface die Übertragung zu einem Speicher- und Auswertemedium (PC).

## Patentansprüche

1. Anordnung zur Signalverarbeitung am Ausgang eines Mehrkanaldetektors bei der spektral aufgelösten Erfassung von zeitlich veränderlichen Fluoreszenzerscheinungen in einem Mikroskop, insbesondere Lebensdauermessungen, wobei dem Ausgang des Mehrkanaldetektors ein FPGA (free programmable gate array) nachgeordnet ist,
**dadurch gekennzeichnet, dass** innerhalb der FPGA durch Hardwareverdrahtung unterschiedlicher Länge und/ oder programmierbare Verzögerung durch Öffnung verschiedener Register zu verschiedenen Zeiten eine zeitliche Zuordnung von eingehenden Messwerten erfolgt.

2. Anordnung nach Anspruch 1,
wobei den Kanälen des Mehrkanaldetektors im FPGA asynchrone Zähler zugeordnet sind.

3. Anordnung nach Anspruch 2,
wobei eine Zeittaktvorgabe (Pixelclock) vorgesehen ist, die bestimmt, wann der Zählerstand ausgelesen und abgespeichert wird.

4. Anordnung nach Anspruch 3,
wobei eine zeitliche Zuordnung von Probenreaktionen auslösenden Laserpulsen zu der Zeittaktvorgabe (Pixelclock) vorgesehen ist.

5. Laser-Scanning-Mikroskop nach einem der vorangehenden Ansprüche, das Dispersionsmittel zur spektralen Auslösung von Fluoreszenzlicht sowie einen Mehrkanaldetektor zur Erfassung der Spektralkomponenten in mehreren Spektralkanälen aufweist.

## Claims

1. Arrangement for signal processing at the output of a multi-channel detector during spectrally resolved acquisition of time-varying fluorescence appearances in a microscope, in particular life-time measurements, wherein an FPGA (free programmable gate array) is disposed downstream of the output of the multi-channel detector, **characterized in that** a temporal assignment of incoming measurement values is brought about within the FPGA by hardware wiring of different lengths and/or by a programmable delay by opening various registers at various different times.

2. Arrangement according to Claim 1, wherein asynchronous counters are assigned to the channels of the multi-channel detector in the FPGA.

3. Arrangement according to Claim 2, wherein clock timing (a pixel clock) is provided, which determines when the counter reading is read out and stored.

4. Arrangement according to Claim 3, wherein a temporal assignment of laser pulses triggering sample reactions to the clock timing (pixel clock) is provided.

5. Laser scanning microscope according to one of the preceding claims, which has dispersion means for the spectral resolution of fluorescence light and a multi-channel detector for acquiring the spectral components in a plurality of spectral channels.

## Revendications

1. Ensemble de traitement des signaux à la sortie d'un détecteur multicanaux, dans la saisie à résolution spectrale de phénomènes de fluorescence variables dans le temps dans un microscope, en particulier pour des mesures de durée de vie, un FPGA ("free programmable gate array") étant disposé à la sortie du détecteur multicanaux,
**caractérisé en ce que**
une association temporelle par rapport à des valeurs de mesure entrantes a lieu à l'intérieur du FPGA par câblage matériel de différentes longueurs et ralentissement programmable par ouverture de différents registres à différents moments.

2. Ensemble selon la revendication 1, dans lequel des compteurs asynchrones sont associés au détecteur multicanaux dans le FPGA.

3. Ensemble selon la revendication 2, dans lequel une prescription de cadence temporelle (horloge de pixels) est prévue et détermine quand l'état du compteur doit être lu ou mis en mémoire.

4. Ensemble selon la revendication 3, dans lequel une association temporelle entre des impulsions laser qui déclenchent des réactions dans les échantillons et la prescription de cadence temporelle (horloge de pixels) est prévue.

5. Microscope à balayage laser selon l'une des revendications précédentes, qui présente des moyens de dispersion permettant une résolution spectrale de la lumière fluorescente ainsi qu'un détecteur multicanaux qui saisit les composantes spectrales dans plusieurs canaux spectraux.
